# EUROPÄISCHE PATENTANMELDUNG

(11) **EP 0 665 190 A2**
(43) Veröffentlichungstag der Anmeldung: **02.08.1995**
(21) Anmeldenummer: 94119493.8
(22) Anmeldetag: 09.12.1994
(51) Int. Cl.: C03B 33/095

(54) **Verfahren zum Trennen von Bildschirm-Glasröhren**

(30) Priorität: 31.01.1994 DE 4402793
(71) Anmelder: Energie-Versorgung Schwaben AG, D-70174 Stuttgart (DE)
(72) Erfinder: Trutpert, Beyerle, Dr., D-76307 Karlsbad (DE)
(74) Vertreter: Patentanwälte Beetz - Timpe - Siegfried Schmitt-Fumian - Mayr

(57) **Zusammenfassung**

Gegenstand der Erfindung ist ein Verfahren zum Trennen von Bildschirm-Glasröhren in den frontseitigen Bildschirmteil und in den Konusteil durch Ausbildung einer lokalen Wärmespannungszone. Gemäß der Erfindung werden die Bildröhren auf eine vorgegebene Temperatur erwärmt und in ihrer jeweiligen Trennungs- bzw. Wärmespannungszone durch mindestens einen Kühlmittelstrahl schockartig abgekühlt, so daß der Konusteil vom Bildschirmteil abbricht. Anschließend werden die voneinander getrennten Bildschirmteile und die Konusteile separat abgefördert.

## Beschreibung

Die Erfindung betrifft ein Verfahren zum Trennen von Bildschirm-Glasröhren in den frontseitigen Bildschirmteil und in den Konusteil durch Ausbildung einer lokalen Wärmespannungszone.

Bildröhren von Fernsehgeräten, Monitoren od. dgl. bestehen in der Regel aus einem frontseitigen Bildschirmteil und einem Konusteil, die z. B. durch Verlöten fest und gasdicht miteinander verbunden sind. Die Gläser der Bildschirmteile und der Konusteile unterscheiden sich in ihrer chemischen Zusammensetzung und damit auch in der Möglichkeit ihres Wiedereinsatzes als Sekundärrohstoff.

Bei der herkömmlichen Aufbereitung von Bildschirm-Glasröhren erfolgt in der Regel keine Trennung der Bildschirmteile von den Konusteilen, sondern die Glasröhren werden nach der Abtrennung der elektrischen Bestandteile als Glasbruch weiterverwendet.

Es sind bereits auch Verfahren zur Trennung der Bildröhrenteile von den Konusteilen im Betrieb, die auf der Grundlage von mechanischen Trenneffekten, durch Verwendung eines Hitzdrahtes oder durch Aufheizen der gesamten Bildröhre bis über die Schmelztemperatur des verbindenden Glaslotes durchgeführt werden. Bei den mechanischen Trennverfahren ergeben sich jedoch Staubemissionen oder unerwünschte Reststoffe (z.B. Schleifstaubschlämme). Die unter Verwendung eines Hitzdrahtes arbeitenden Verfahren z.B. gemäß DE-A-42 05 404 erfordern einen relativ hohen konstruktiven und apparatetechnischen Aufwand, der mit entsprechend hohen Kosten verbunden ist. Die Trennung der Bildröhrenteile durch Aufheizen der Bildröhre über die Schmelztemperatur des Glaslotes erfordert eine mehrstündige Durchlaufzeit durch spezielle Öfen und ist energieintensiv. Darüber hinaus erfordern alle bekannten Verfahren die vorherige Entfernung des Verbindungsrings zwischen dem Bildschirmteil und dem Konusteil, was den gesamten Verfahrensablauf kompliziert und verlängert.

Aus der EP-A-0 593 143 ist ein Verfahren zur Trennung von Bildröhren in den Bildschirmteil und in den Konusteil bekannt, bei dem an der zuvor belüfteten Bildröhre zuerst eine lokale Oberflächenstörung erzeugt und anschließend die Bildröhre im Trennbereich mittels eines elektrischen Hitzdrahtes stark aufgeheizt wird. Dieses Verfahren erfordert einen erheblichen Aufwand bei der Herstellung der Oberflächenstörung und insbesondere bei dem notwendigen genauen Positionieren des Hitzdrahtes.

Aufgabe der Erfindung ist es, ein Verfahren zum Trennen von Bildschirm-Glasröhren in den frontseitigen Bildschirmteil und in den Konusteil aufzuzeigen, das bei geringem technischen und kostenmäßigen Aufwand und ohne Entfernung des Verbindungsringes eine emissionsfreie und reststoffarme Abtrennung der Konusteile von den Bildschirmteilen mit verringertem Energieaufwand gewährleistet.

Diese Aufgabe wird durch die im Patentanspruch 1 angegebenen Maßnahmen gelöst.

Durch die erfindungsgemäß durchgeführte Trennung der Schirmglasteile von den Konusteilen wird eine Sortierung nach den verschiedenen Glassorten erzielt, wobei die Einzelfraktionen aufgrund der erhaltenen Sortenreinheit insbesondere hinsichtlich ihrer Bestandteile Barium und Blei einer jeweils gesonderten Aufbereitungsbehandlung zugeführt werden können. Ein weiterer Vorteil des erfindungsgemäßen Verfahrens besteht darin, daß die Glastrennung der Bildschirm-Glasröhren automatisch und ohne manuelle Eingriffe erfolgt, was sich günstig auf die gesamten Aufbereitungskosten sowie auf die Durchsatzleistungen auswirkt. Im Gegensatz zu bekannten Verfahren erfolgt die erfindungsgemäße Trennung emissionsfrei, so daß schädliche Auswirkungen auf das Bedienungspersonal und die Umwelt vermieden werden. Darüber hinaus erfolgt auch eine Wertsteigerung des nachgeschalteten Recycling-Prozesses, da nur die abgetrennten und separat abgeförderten Bildröhrenteile einer besonderen Behandlung zur Entfernung bzw. Ablösung der Schadstoff-Schichten unterzogen werden müssen.

Hinsichtlich Verfahrensdurchführung hat es sich als besonders zweckmäßig erwiesen, die Glasröhren-Bildschirme in mehreren Stationen durch Besprühen mit vorgewärmtem Wasser auf ca. 90 °C aufzuwärmen, so daß keine unzulässig hohen Spannungen im Glas entstehen. Die schockartige Abkühlung der Bildschirm-Glasröhren im Trennbereich zwischen dem frontseitigen Bildschirmteil und dem Konusteil erfolgt zweckmäßigerweise durch einen oder mehrere lokal scharf begrenzte Kaltwasser-Strahlen mit Temperaturen von z. B. unter 5 °C, die gezielt Wärmespannungen in der eng begrenzten ringförmigen Trennzone erzeugen, durch die ein in der Regel ringförmiger Bruch initiiert wird. Statt Kaltwasser kann auch ein anderes geeignetes Abschreck-Medium verwendet werden. Eine insbesondere im Hinblick auf die anschließende Separierung der abgetrennten Teile besonders günstige Variante zeichnet sich dadurch aus, daß die auf ihre vorgegebene Temperatur erwärmten Bildschirm-Glasröhren mit nach oben weisendem Bildschirmteil angehoben werden und daß das Kühlmedium seitlich gegen die hängende Bildschirm-Glasröhre gerichtet wird, so daß der abbrechende Konusteil in einen Sammelbehälter fällt und als Glasbruch abgefördert werden kann. Um den Trenneffekt zu fördern, kann die Abtrennung des Konusteils durch ein Klopfwerk, einen Vibrator od. dgl. unterstützt werden.

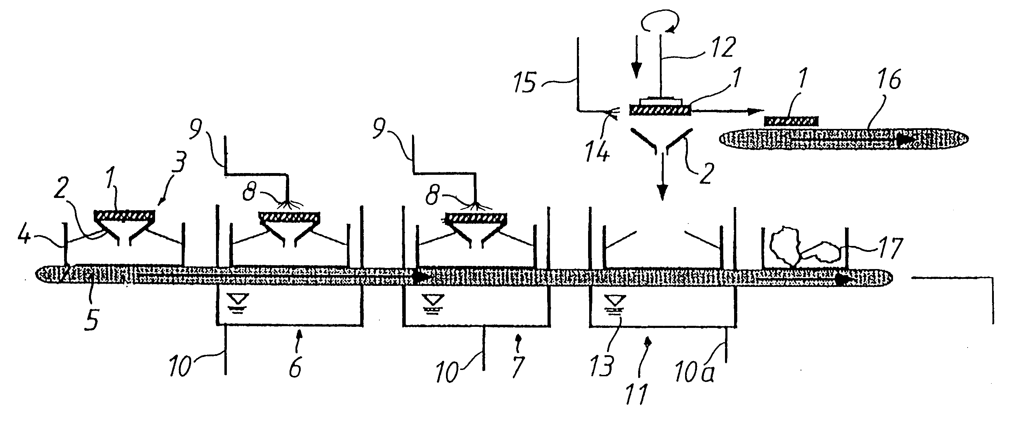

Im folgenden wird die Durchführung des erfindungsgemäßen Verfahrens in einer in der Zeichnung schematisch dargestellten Anlage im einzelnen beschrieben.

Bei der dargestellten Anlage werden die aus einem oberen Bildschirmteil 1 und einem damit fest verbundenen Konusteil 2 bestehenden Glasröhren-Bildschirme 3 auf Werkstückträger 4 gelegt und mittels eines Horizontalförderers 5 in Pfeilrichtung durch eine oder mehrere (hier zwei dargestellte) hintereinander angeordnete Aufwärmstationen 6, 7 transportiert. In jeder Aufwärmstation 6, 7 sind Düsen 8 montiert, die über Leitungen 9 an einen Heißwasser-Kreislauf angeschlossen sind. Mit dem über die Leitungen und die Düsen 8 zugeführten Warmwasser, das in der letzten Station eine Temperatur von etwa 90 °C hat, werden die Bildröhren von oben berieselt und damit gleichmäßig auf eine Temperatur von etwa 90 °C erwärmt. Das ablaufende Wasser wird über Leitungen 10 in den Warmwasser-Kreislauf zurückgeführt. Der letzten (hier zweiten) Aufwärmstation 7 ist die eigentliche Trennstation 11 nachgeordnet, in der eine zweckmäßig als Saugheber ausgebildete Hebeeinrichtung 12 oberhalb des Horizontalförderers angeordnet ist. Über eine Rücklaufleitung 10a ist ein Tropfbecken 13 mit dem Warmwasser-Kreislauf verbunden. In einem vorgegebenen vertikalen Abstand oberhalb des Horizontalförderers 5 ist mindestens eine Kühlmittel-Düse 14 an einer - nicht dargestellten - Halterung montiert, der über eine Leitung 15 ein hier zweckmäßig als Kaltwasser von unter 5 °C verwendetes Kühlmittel zugeführt wird. Die Kaltwasserstrahlen treffen in einer schmalen Zone seitlich auf den in die dargestellte angehobene Position bewegten Glasröhren-Bildschirm auf und erzeugen durch die schockartige Abkühlung in dieser schmalen Trennzone hohe Spannungen, die zum Abbrechen des Konusteils 2 von dem nach wie vor an der Hebeeinrichtung 12 hängenden Bildschirmteil 1 führen. Letzterer wird durch eine Horizontalbewegung der Hebeeinrichtung 12 auf einem nachgeordneten Transportmittel 16 abgelegt und der Weiterverarbeitung (Metallabscheidung, Reinigung) zugeführt. Der abgebrochene Konusteil 2 fällt in einen seitlich positionierten Sammelbehälter 17 und kann als Glasbruch der weiteren Verwertung zugeführt werden.

Die Erfindung ist nicht auf die vorstehend beschriebene Ausführung beschränkt. So können beispielsweise statt der Aufwärmung mit Wasser als Heizmittel auch vorgewärmte Luft oder andere Medien verwendet werden. Ebenso kann auch die schockartige Abkühlung in dem eng begrenzten Trennbereich durch andere Medien erfolgen, wobei die Düsen 8, 14 auch kranzförmig angeordnet sein können, um eine allseitig gleiche Wärmeeinwirkung zu erzielen. Eine ähnliche Wirkung läßt sich durch eine Drehbewegung des Glasröhren-Bildschirms während des Abschreckvorganges erzielen.

## Patentansprüche

1. Verfahren zum Trennen von Bildschirm-Glasröhren in den frontseitigen Bildschirmteil und in den Konusteil durch Ausbildung einer lokalen Wärmespannungszone,
**dadurch gekennzeichnet,**
daß die Bildröhren auf eine vorgegebene Temperatur erwärmt werden,
daß die Bildröhren in ihrer jeweiligen Trennungs- bzw. Wärmespannungszone durch mindestens einen Kühlmittelstrahl schockartig abgekühlt werden und
daß die voneinander getrennten Bildschirmteile und die Konusteile separat abgefördert werden.

2. Verfahren nach Anspruch 1,
dadurch gekennzeichnet,
daß die Bildschirm-Glasröhren durch Besprühen mit Wasser, Dampf oder andere geeignete Wärmeträger bis auf ca. 90 °C erwärmt werden.

3. Verfahren nach Anspruch 1 oder 2,
dadurch gekennzeichnet,
daß die erwärmten Bildschirm-Glasröhren an der Trennzone durch Kaltwasser-Strahlen schockartig abgekühlt werden.

4. Verfahren nach einem der Ansprüche 1 bis 3,
dadurch gekennzeichnet,
daß zur Unterstützung des Trennvorganges ein Klopfwerk vorgesehen ist.

5. Verfahren nach einem der Ansprüche 1 bis 4,
dadurch gekennzeichnet,
daß die auf Trägern mit nach oben weisendem Bildschirmteil aufliegenden Bildschirm-Glasröhren in kontinuierlicher Folge in einer oder mehreren Aufwärm-Station(en) steigendem Temperaturniveaus mit Warmwasser berieselt bzw. besprüht werden,
daß die auf die vorgegebene Temperatur erwärmten Bildschirm-Glasröhren in einer Trennstation mittels einer am Bildschirmteil angreifenden Hebevorrichtung von ihren Trägern abgehoben werden,
daß mindestens ein örtlich scharf begrenzter Kühlmittelstrahl seitlich gegen die Trennzone der hängenden Bildschirm-Glasröhren gerichtet wird und
daß der Bildschirmteil von der Hebevorrichtung auf ein Transportmittel abgelegt und der Konusteil als Glasbruch gesammelt wird.

6. Verfahren nach einem der Ansprüche 1 bis 5,
dadurch gekennzeichnet,
daß den Bildschirm-Glasröhren während des schockartigen Abkühlvorganges eine Drehbewegung um ihre vertikale Achse erteilt wird.
